# EUROPEAN PATENT APPLICATION

(11) **EP 3 334 203 A1**
(43) Date of publication of application: **13.06.2018**
(21) Application number: 17188826.6
(22) Date of filing: 20.06.2011
(51) Int. Cl.: H04W 24/02, H04W 48/04, H04W 36/00, H04W 12/08, H04W 12/06, H04W 84/04

(54) **METHOD AND APPARATUS FOR SUPPORTING HOME NODE-B MOBILITY**

(30) Priority: 18.06.2010 US 356318 P; 23.08.2010 US 376103 P; 01.10.2010 US 389081 P; 05.11.2010 US 410703 P; 11.02.2011 US 201161441900 P; 29.04.2011 US 201161480874 P
(62) Divisional of application: 11728988.4
(71) Applicant: Interdigital Patent Holdings, Inc., Wilmington, DE 19809 (US)
(72) Inventor: ADJAKPLE, Pascal, M, Great Neck, NY New York 11024 (US); WATFA, Mahmoud, Saint Leonard, Québec H1S 2B3 (CA); MILLER, James, M., Verona, NY New York 07044 (US); OLVERA-HERNANDEZ, Ulises, Kirkland, Québec H9J 4A5 (CA)
(74) Representative: AWA Sweden AB

(57) **Abstract**

Techniques for supporting home NodeB (HNB) mobility and virtual active set management in support of soft handover are disclosed. A source HNB may decide to initiate a relocation of a wireless transmit/receive unit (WTRU) from the source HNB to a target HNB, and may initiate an access control for the WTRU to determine whether the WTRU is allowed to receive a service provided via the target HNB. The source HNB may send an access control query to either a core network (CN) or an HNB gateway (HNB-GW) for verifying that the WTRU is allowed to receive a service provided via the target HNB. The access control query response may include access control information for all or a subset of subscriber groups that the WTRU is a member of. The WTRU may maintain a virtual active set (VAS) including at least one macro cell and at least one femto cell.

## Description

### CROSS REFERENCE TO RELATED APPLICATIONS

This application claims the benefit of U.S. Provisional Application Nos. 61/356,318 filed June 18, 2010, 61/376,103 filed August 23, 2010, 61/389,081 filed October 1, 2010, 61/410,703 filed November 5, 2010, 61/441,900 filed February 11, 2011, and 61/480,874 filed April 29, 2011, the contents of which are hereby incorporated by reference herein.

### BACKGROUND

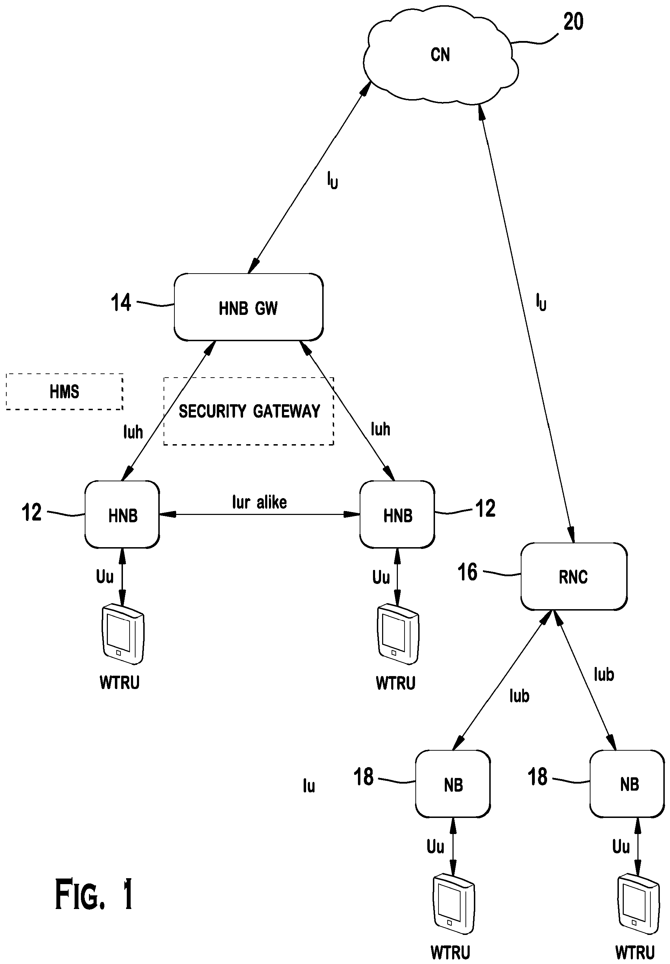

FIG. 1 shows an example home NodeB (HNB) system architecture. The system includes a plurality of HNBs 12, at least one HNB gateway (GW) 14, a plurality of NodeBs (NBs) 18, at least one radio network controller (RNC) 18, and a core network (CN) 20. The "HNB" includes home evolved NodeB (HeNB) and will be referred to collectively "HNB" hereafter. An HNB subsystem including the HNBs 12 and the HNB GW 14 is deployed in addition to the radio access network including the RNC 16 and the NodeBs 18.

The HNB 12 is a customer-premise equipment that connects a wireless transmit/receive unit (WTRU) over wireless air interface, (e.g., UMTS terrestrial radio access network (UTRAN) or evolved UTRAN, etc.), to the mobile operator's CN using a broadband Internet protocol (IP) backhaul. The HNBs 12 provide services to its associated closed subscriber group (CSG) members. The HNB GW 14 is a mobile operator's equipment through which the HNB 12 gets an access to the mobile operator's CN 20.

HNB to HNB mobility has been discussed and solutions for the intra-HNB-GW/intra-CSG mobility that does not involve the CN has been proposed. However, some issues with the solutions have been recognized including Iu user plane (UP) handling during mobility, location reporting, data volume reporting, and radio access bearer (RAB) related parameters handling. Moreover, for the inter-CSG handover, the CN needs to be involved due to the CSG access control or membership verification. Given the fact that the conventional HNB system architecture does not support a direct interface between HNBs, mobility involving the CN relies on serving radio network subsystem (SRNS) relocation procedure which implies possible higher handover latency as well as heavy burden on the CN in terms of signaling load processing, especially in an enterprise deployment environment.

### SUMMARY

Method and apparatus for supporting HNB mobility and virtual active set management in support of soft handover are disclosed. A source HNB may decide to handover a wireless transmit/receive unit (WTRU) from the source HNB to a target HNB, and may initiate an access control for the WTRU to determine whether the WTRU is allowed to receive a service provided via the target HNB. The source HNB may send an access control query to either a core network (CN) or an HNB gateway (HNB-GW) for verifying that the WTRU is allowed to receive a service provided via the target HNB. The access control query response may include access control information for all or a subset of subscriber groups that the WTRU is a member of.

In another embodiment, after an HNB scans its coverage area (its environment), the HNB may perform an HNB registration with an HNB-GW, and identify a cell under a macro-network RNC as a neighbor. The HNB may send a request to the HNB-GW to setup a connection toward the RNC. The radio network subsystem application part (RNSAP) user adaptation layer (RNA) messages may be terminated at the HNB-GW and an internal connectivity table at the HNB-GW may be updated to reflect a creation of connectivity between the HNB and the RNC. The WTRU may maintain a virtual active set (VAS) for a non-used frequency including at least one macro cell and at least one femto cell for supporting soft handover between macro cells and femto cells.

### BRIEF DESCRIPTION OF THE DRAWINGS

A more detailed understanding may be had from the following description, given by way of example in conjunction with the accompanying drawings wherein:
FIG. 1 shows an example HNB system architecture;
FIG. 2A is a system diagram of an example communications system in which one or more disclosed embodiments may be implemented;
FIG. 2B is a system diagram of an example wireless transmit/receive unit (WTRU) that may be used within the communications system illustrated in FIG. 2A;
FIG. 2C is a system diagram of an example radio access network and an example core network that may be used within the communications system illustrated in FIG. 2A;
FIG. 3 is an example signaling diagram for HNB-to-HNB handover
FIG. 4 is a signaling diagram of an example process for access control triggered by the source HNB in one embodiment;
FIG. 5 is a signaling diagram of an example process for access control in one embodiment;
FIG. 6 is a signaling diagram of an example process wherein an access control is performed at the target HNB;
FIG. 7 is a signaling diagram of an example process that the source HNB queries the HNB-GW for access control;
FIG. 8 is a signaling diagram of an example process for access control in one embodiment;
FIG. 9 shows a signaling diagram of access control and membership verification in one embodiment;
FIG. 10 is a signaling diagram of an example process of data bi-casting in one embodiment;
FIG. 11 is a signaling diagram of an example process for bi-casting in accordance with another embodiment;
FIG. 12 shows an example HNB access network with macro layer to femto layer mobility reference model;
FIG. 13 shows an example network architecture including the HNB access network and the macro radio access network;
FIG. 14 shows an example control plane protocol stack in one embodiment;
FIG. 15 shows an example control plane protocol stack in accordance with another embodiment;
FIG. 16 shows an example user plane protocol stack in one embodiment;
FIG. 17 shows an example user plane protocol stack in another embodiment; and
FIG. 18 is a flow diagram of an example process for Iurh setup in one embodiment.

### DETAILED DESCRIPTION

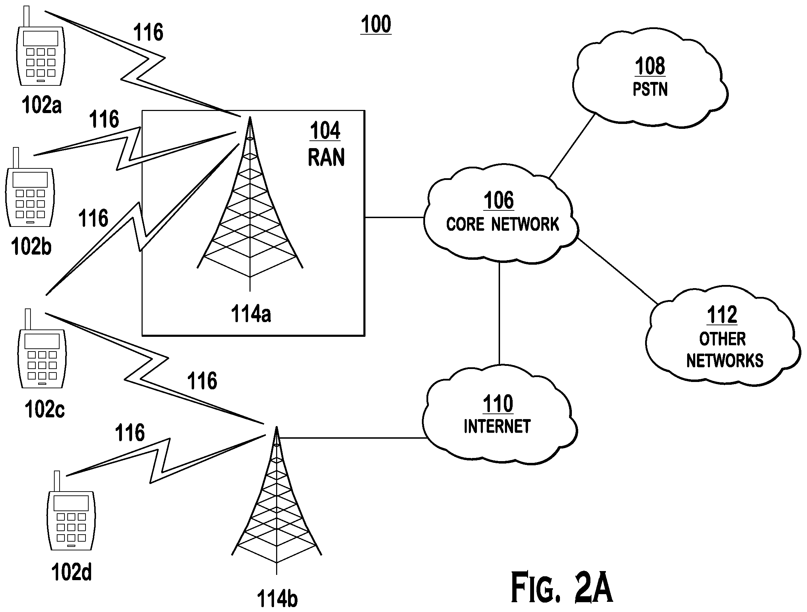

FIG. 2A is a diagram of an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), and the like.

As shown in FIG. 2A, the communications system 100 may include wireless transmit/receive units (WTRUs) 102a, 102b, 102c, 102d, a radio access network (RAN) 104, a core network 106, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d may be configured to transmit and/or receive wireless signals and may include user equipment (UE), a mobile station, a fixed or mobile subscriber unit, a pager, a cellular telephone, a personal digital assistant (PDA), a smartphone, a laptop, a netbook, a personal computer, a wireless sensor, consumer electronics, and the like.

The communications systems 100 may also include a base station 114a and a base station 114b. Each of the base stations 114a, 114b may be any type of device configured to wirelessly interface with at least one of the WTRUs 102a, 102b, 102c, 102d to facilitate access to one or more communication networks, such as the core network 106, the Internet 110, and/or the networks 112. By way of example, the base stations 114a, 114b may be a base transceiver station (BTS), a Node-B, an eNode B, a Home Node B, a Home eNode B, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104, which may also include other base stations and/or network elements (not shown), such as a base station controller (BSC), a radio network controller (RNC), relay nodes, etc. The base station 114a and/or the base station 114b may be configured to transmit and/or receive wireless signals within a particular geographic region, which may be referred to as a cell (not shown). The cell may further be divided into cell sectors. For example, the cell associated with the base station 114a may be divided into three sectors. Thus, in one embodiment, the base station 114a may include three transceivers, i.e., one for each sector of the cell. In another embodiment, the base station 114a may employ multiple-input multiple output (MIMO) technology and, therefore, may utilize multiple transceivers for each sector of the cell.

The base stations 114a, 114b may communicate with one or more of the WTRUs 102a, 102b, 102c, 102d over an air interface 116, which may be any suitable wireless communication link (e.g., radio frequency (RF), microwave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104 and the WTRUs 102a, 102b, 102c may implement a radio technology such as Universal Mobile Telecommunications System (UMTS) Terrestrial Radio Access (UTRA), which may establish the air interface 116 using wideband CDMA (WCDMA). WCDMA may include communication protocols such as High-Speed Packet Access (HSPA) and/or Evolved HSPA (HSPA+). HSPA may include High-Speed Downlink Packet Access (HSDPA) and/or High-Speed Uplink Packet Access (HSUPA).

In another embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A).

In other embodiments, the base station 114a and the WTRUs 102a, 102b, 102c may implement radio technologies such as IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 2A may be a wireless router, Home Node B, Home eNode B, or access point, for example, and may utilize any suitable RAT for facilitating wireless connectivity in a localized area, such as a place of business, a home, a vehicle, a campus, and the like. In one embodiment, the base station 114b and the WTRUs 102c, 102d may implement a radio technology such as IEEE 802.11 to establish a wireless local area network (WLAN). In another embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, etc.) to establish a picocell or femtocell. As shown in FIG. 2A, the base station 114b may have a direct connection to the Internet 110. Thus, the base station 114b may not be required to access the Internet 110 via the core network 106.

The RAN 104 may be in communication with the core network 106, which may be any type of network configured to provide voice, data, applications, and/or voice over internet protocol (VoIP) services to one or more of the WTRUs 102a, 102b, 102c, 102d. For example, the core network 106 may provide call control, billing services, mobile location-based services, pre-paid calling, Internet connectivity, video distribution, etc., and/or perform high-level security functions, such as user authentication. Although not shown in FIG. 2A, it will be appreciated that the RAN 104 and/or the core network 106 may be in direct or indirect communication with other RANs that employ the same RAT as the RAN 104 or a different RAT. For example, in addition to being connected to the RAN 104, which may be utilizing an E-UTRA radio technology, the core network 106 may also be in communication with another RAN (not shown) employing a GSM radio technology.

The core network 106 may also serve as a gateway for the WTRUs 102a, 102b, 102c, 102d to access the PSTN 108, the Internet 110, and/or other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and the internet protocol (IP) in the TCP/IP internet protocol suite. The networks 112 may include wired or wireless communications networks owned and/or operated by other service providers. For example, the networks 112 may include another core network connected to one or more RANs, which may employ the same RAT as the RAN 104 or a different RAT.

Some or all of the WTRUs 102a, 102b, 102c, 102d in the communications system 100 may include multi-mode capabilities, i.e., the WTRUs 102a, 102b, 102c, 102d may include multiple transceivers for communicating with different wireless networks over different wireless links. For example, the WTRU 102c shown in FIG. 2A may be configured to communicate with the base station 114a, which may employ a cellular-based radio technology, and with the base station 114b, which may employ an IEEE 802 radio technology.

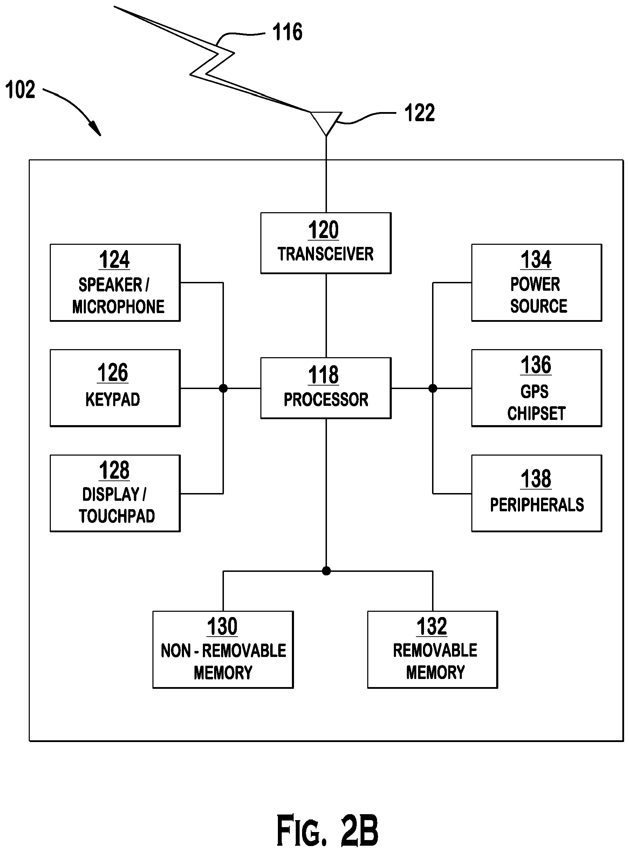

FIG. 2B is a system diagram of an example WTRU 102. As shown in FIG. 2B, the WTRU 102 may include a processor 118, a transceiver 120, a transmit/receive element 122, a speaker/microphone 124, a keypad 126, a display/touchpad 128, non-removable memory 106, removable memory 132, a power source 134, a global positioning system (GPS) chipset 136, and other peripherals 138. It will be appreciated that the WTRU 102 may include any subcombination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Array (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 2B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 116. For example, in one embodiment, the transmit/receive element 122 may be an antenna configured to transmit and/or receive RF signals. In another embodiment, the transmit/receive element 122 may be an emitter/detector configured to transmit and/or receive IR, UV, or visible light signals, for example. In yet another embodiment, the transmit/receive element 122 may be configured to transmit and receive both RF and light signals. It will be appreciated that the transmit/receive element 122 may be configured to transmit and/or receive any combination of wireless signals.

In addition, although the transmit/receive element 122 is depicted in FIG. 2B as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as UTRA and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 106 and/or the removable memory 132. The non-removable memory 106 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs or video), a universal serial bus (USB) port, a vibration device, a television transceiver, a hands free headset, a Bluetooth® module, a frequency modulated (FM) radio unit, a digital music player, a media player, a video game player module, an Internet browser, and the like.

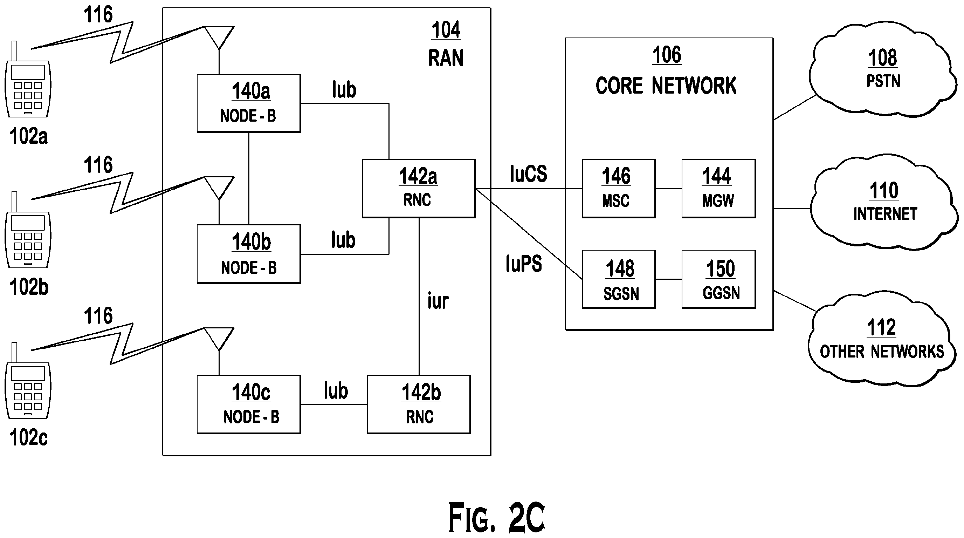

FIG. 2C is a system diagram of the RAN 104 and the core network 106 according to an embodiment. As noted above, the RAN 104 may employ a UTRA radio technology to communicate with the WTRUs 102a, 102b, 102c over the air interface 116. The RAN 104 may also be in communication with the core network 106. As shown in FIG. 2C, the RAN 104 may include Node-Bs 140a, 140b, 140c, which may each include one or more transceivers for communicating with the WTRUs 102a, 102b, 102c over the air interface 116. The Node-Bs 140a, 140b, 140c may each be associated with a particular cell (not shown) within the RAN 104. The RAN 104 may also include RNCs 142a, 142b. It will be appreciated that the RAN 104 may include any number of Node-Bs and RNCs while remaining consistent with an embodiment.

As shown in FIG. 2C, the Node-Bs 140a, 140b may be in communication with the RNC 142a. Additionally, the Node-B 140c may be in communication with the RNC142b. The Node-Bs 140a, 140b, 140c may communicate with the respective RNCs 142a, 142b via an Iub interface. The RNCs 142a, 142b may be in communication with one another via an Iur interface. Each of the RNCs 142a, 142b may be configured to control the respective Node-Bs 140a, 140b, 140c to which it is connected. In addition, each of the RNCs 142a, 142b may be configured to carry out or support other functionality, such as outer loop power control, load control, admission control, packet scheduling, handover control, macrodiversity, security functions, data encryption, and the like.

The core network 106 shown in FIG. 2C may include a media gateway (MGW) 144, a mobile switching center (MSC) 146, a serving GPRS support node (SGSN) 148, and/or a gateway GPRS support node (GGSN) 150. While each of the foregoing elements are depicted as part of the core network 106, it will be appreciated that any one of these elements may be owned and/or operated by an entity other than the core network operator.

The RNC 142a in the RAN 104 may be connected to the MSC 146 in the core network 106 via an IuCS interface. The MSC 146 may be connected to the MGW 144. The MSC 146 and the MGW 144 may provide the WTRUs 102a, 102b, 102c with access to circuit-switched networks, such as the PSTN 108, to facilitate communications between the WTRUs 102a, 102b, 102c and traditional land-line communications devices.

The RNC 142a in the RAN 104 may also be connected to the SGSN 148 in the core network 106 via an IuPS interface. The SGSN 148 may be connected to the GGSN 150. The SGSN 148 and the GGSN 150 may provide the WTRUs 102a, 102b, 102c with access to packet-switched networks, such as the Internet 110, to facilitate communications between and the WTRUs 102a, 102b, 102c and IP-enabled devices.

As noted above, the core network 106 may also be connected to the networks 112, which may include other wired or wireless networks that are owned and/or operated by other service providers.

It should be noted that the embodiments disclosed herein may be adopted for the UTRAN including HNBs and HNB-GW or the E-UTRAN system including HeNB(s) and HeNB-GW(s), or any wireless communication systems. It should be noted that the embodiments may be implemented with or without a direct interface between the HNBs. The embodiments may be applied to any kinds of cells, such as hybrid cell, macro cell, closed CSG cell, etc., all of which may be either a source or a target in a relocation procedure. The source cell and the target cell in relocation may or may not have the same CSG ID and may or may not belong to the same HNB-GW. The embodiments are also applicable to non-CSG WTRUs, CSG WTRUs, and as non-CSG HNBs.

The embodiments disclosed herein are also applicable to mobility between macro network layer and H(e)NB network layer including, but not limited to, mobility from an RNC to an HNB or from an HNB to an RNC possibly with the direct Iur/Iurh connection or Iur/Iurh connection via HNB-GW, or mobility from an eNB to an HeNB or from an HeNB to an eNB using direct X2 interface connection or an X2 connection via the HeNB-GW. It should be noted that the embodiments disclosed herein may be applied in any combination.

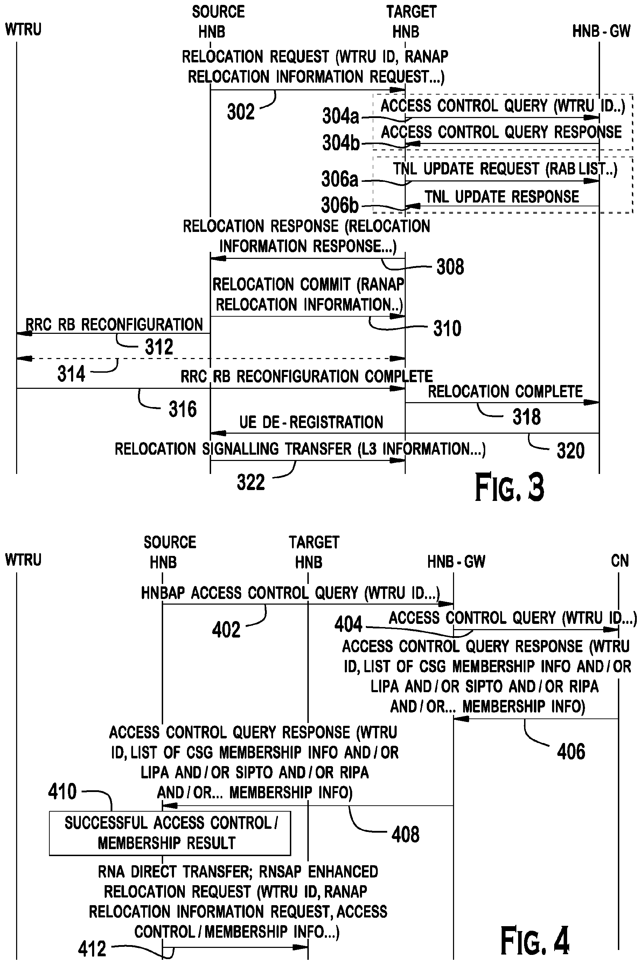

FIG. 3 is an example signaling diagram for HNB-to-HNB handover, (i.e., relocation), for a WTRU. A source HNB makes a handover decision based on measurements from the WTRU and sends a relocation request message to the target HNB to prepare the target HNB for a relocation (302). The target HNB may query the HNB-GW to perform an access control for the WTRU that is being handed over (304a, 304b). The target HNB may update the transport network layer information for any RABs that are to be relocated to it by sending a transport network layer (TNL) update request message to the HNB-GW (306a), and the HNB-GW responds with a TNL update response (306b). The target HNB sends a relocation response message back to the source HNB to indicate that it has successfully prepared for the relocation (308).

The source HNB sends a message containing a relocation commit message to commit the relocation preparation on the target HNB (310). This message may include information to aid the relocation procedure. The source HNB reconfigures the WTRU to commence the handover procedure by sending an RRC radio bearer (RB) reconfiguration message (312). The WTRU performs Layer 1 synchronization with the target HNB (314). The WTRU then completes the RRC reconfiguration procedure by sending an RRC RB reconfiguration complete message to the target HNB (316).

The target HNB indicates to the HNB-GW that the WTRU has successfully relocated via the UE relocation complete message (318). The HNB-GW switches the user plane (UP) to the target HNB, and sends the UE deregister message to the source HNB indicating successful relocation with an appropriate cause value (320). The source HNB sends an RNA disconnect message containing relocation signaling transfer message to the target HNB to transfer any L3 information that the source HNB may have received during the relocation procedure and locally releases any resources it has for the WTRU (322).

Embodiments for handling of Iu UP initialization failure of some of the RABs to be relocated are disclosed hereafter.

During the relocation procedure, the Iu UP entity needs to be relocated to point to the target HNB. Upon relocation, the Iu UP entity is initialized by the target HNB as per normal relocation handling. For circuit-switched (CS) RABs, it is possible that the Iu UP in the target HNB may use different RAB flow combination indicator (RFCI) values than the source HNB. Since the relocation is transparent to the mobile switching center (MSC), the Iu UP initialization and any potential change in the value of the RFCI is not expected by the MSC. Since mobility is anchored by the HNB-GW, (i.e., transparent to the CN), the Iu UP may be terminated in the HNB-GW, and RFCI mapping (from the new set to the old) may be performed. However, the Iu UP initialization failure for some or all of the RABs being relocated may occur if the target HNB cannot accommodate all the RABs that are requested by the source HNB for a particulate WTRU that is considered for handover. Since the CN, (e.g., MSC), is not involved in the relocation procedure, it is not expecting to receive a message such as a relocation request acknowledge message indicating failure of some of the RABs to be relocated nor does it expect a message such as a relocation failure message.

In one embodiment, the target HNB may send a relocation request acknowledge message to the HNB-GW including the "RABs Failed To Setup" information element (IE). The HNB-GW, upon receiving this message, may issue a radio access network application part (RANAP) RAB modify request message to the CN requesting the CN to trigger an alternative RAB configuration by including an "Alternative RAB Configuration Request" IE in the RAB modify request message. The "RAB Configuration Request" IE may include the list of successfully relocated RABs. Alternatively, the target HNB may trigger or send an RANAP RAB modify request message to the CN to indicate the RABs that were deleted (transparently) as part of the handover. This may be done after the handover is complete. The CN may then initiate other procedures to synchronize the RABs with the HNB and/or the UE. The HNB-GW may issue a relocation command message to the source HNB. The procedure above can be executed for each core network domain.

In another embodiment, in case where the CN initiates an RAB assignment procedure to release the failed RABs, the HNB-GW may respond without consulting the source HNB. Alternatively, the HNB-GW may forward the request to the source HNB.

In another embodiment, the target HNB may reject the relocation request and send a relocation failure message to the HNB-GW, and the HNB-GW may then issue a relocation preparation failure message towards the source HNB. The relocation failure message may also be sent directly to the source HNB by the target HNB in the case of direct interface handover between the source HNB and the target HNB. Upon receiving the relocation preparation failure message, the source HNB may elect to retry the relocation toward the same target HNB with a different set of RAB configuration parameters.

In another embodiment, the target HNB may reject the relocation request and send a relocation failure message to the HNB-GW, and the HNB-GW may then issue a relocation request message to the CN.

In another embodiment, the target HNB may send a relocation request acknowledge message to the HNB-GW including the RABs Failed To Setup IE. The HNB-GW may then send a relocation command message to the source HNB. Upon receiving this message, the source HNB may send a RANAP RAB modify request message to the CN requesting the CN to trigger an alternative RAB configuration by including the "Alternative RAB Configuration Request" IE in the RAB modify request message. The RAB Configuration Request IE may include the list of successfully relocated RABs. Alternatively, the source HNB may select another target HNB and cancel the relocation procedure by sending a relocation cancel message to the HNB-GW. The HNB-GW may then forward the relocation cancel message to the target HNB using, for example, RANAP user adaptation (RUA) direct transfer message.

Embodiments for handling of mismatch between initialization maximum rate and currently used maximum rate are disclosed hereafter.

During the Iu UP initialization procedure, the HNB-GW may check whether the received RFCI allocations from the target HNB match the stored RFCI allocation for the same bearer established with the source HNB. If the maximum rate indicated by the target HNB in the Iu UP initialization control frame is different from the currently used maximum rate, the HNB-GW may consider the Iu UP initialization procedure successful and send an initialization ACK control frame to the target HNB. The HNB-GW may initiate a rate control procedure by sending a rate control PDU indicating the currently used maximum rate to the target HNB. The rate control PDU may be sent after the HNB-GW received an RANAP relocation complete message from the target HNB. Alternatively, the rate control PDU may be sent once the HNB-GW detects that the target HNB has started transferring user data toward the CN.

Alternatively, the HNB-GW may fail the Iu UP initialization procedure, and send an initialization NACK control PDU to the target HNB.

In another embodiment, the maximum rate may be provided to the target HNB as part of the relocation request message. The target HNB may then limit the maximum rate included in the initialization control PDU to the maximum rate currently in use.

For any of the embodiments disclosed above in which the handover (relocation) is executed with some of the RABs deleted at the target HNB, the WTRU may figure out which of its bearers (that correspond to the packet data protocol (PDP) contexts) were deleted as per the RRC connection reconfiguration message. The WTRU may use this as a trigger to send an routing area update (RAU) message to the serving GPRS support node (SGSN) and may include a PDP context status IE. As such, the SGSN and the WTRU may be synchronized in terms of PDP contexts. The CN may then trigger an RAB modification towards the UTRAN, (e.g., HNB-GW and/or HNB).

In another embodiment, the target HNB may send a message, (such as an RANAP relocation information response message), to the source HNB including the "RABs Failed To Setup List" IE. Upon receiving this message, the source HNB may proceed with the handover and then issue an RANAP RAB modify request message to the CN. The RAB configuration request IE may include the list of successfully relocated RABs.

Alternatively, the source HNB may cancel the handover by sending a message, (such as relocation cancel), to the target HNB.

Embodiments for data volume report handling are disclosed hereafter. The UTRAN reports the "Unsuccessfully Transmitted DL Data Volume" IE in an RANAP IU release complete message when the call is finally released and this information may be used by the CN as the charging policy may depend on successful packet count. In case of intra-HNB-GW HNB-to-HNB relocation, an IU connection towards the CN may not be released even though the HNB-GW initiates an IU release towards the source HNB. Therefore, the "Unsuccessfully Transmitted DL Data Volume" IE may be maintained until the Iu connection exits towards the CN due to call release. The HNB-GW may accumulate data volume reports from different HNBs involved in a WTRU's mobility and report the final value to the SGSN at RAB release. However, this puts a heavy burden on the HNB-GW and increases it's a complexity as the HNB-GW tracks and accumulates the data volume reports for all WTRUs under the control of all HNBs attached to that HNB-GW.

In one embodiment, the source HNB may send the cumulative count of the unsuccessfully transmitted packets to the target HNB. At the release of the Iu connection toward the CN, the target HNB may send the volume report to the CN via the HNB-GW with the final cumulative count of unsuccessful transmit packets. For example, in case of direct interface relocation, the source HNB, upon receipt of the relocation release message from the target HNB, may send back to the target HNB in the response message, (e.g., relocation signaling transfer, Iu release complete, relocation release complete, or the like), the cumulative count of the unsuccessfully transmitted packets. At the release of the Iu connection, the final HNB providing a connection to the WTRU may send to the CN (via the HNB-GW) the overall cumulative count of the unsuccessfully transmitted packets for each RAB which requires such report. This information may be carried in the RANAP IU release complete over an RUA direct transfer message.

In another embodiment, the data volume report may be sent after the HNBAP UE de-register message as part of the RNSAP relocation signaling transfer message, (after step 320 in FIG. 3).

Embodiments for handling of a CN-initiated concurrent procedure while relocation is underway transparently to the CN are disclosed hereafter.

In one embodiment, if the CN, (e.g., MSC, SGSN, etc.), sends an RANAP message to the source HNB during an ongoing handover procedure which is transparent to the CN, the HNB-GW may forward the message to the source HNB as long as the handover is not yet completed. The source HNB may either respond to the message or ignore the message. This may depend on whether or not the procedure is one that requires a response from the source HNB to the CN. If the handover is not completed yet, the source HNB may forward this request to the target HNB as part of the handover signaling or after the handover is completed but before the communication between the source HNB and the target HNB is terminated. Alternatively, the source HNB may forward the message in the form of an IE, (e.g., a CN message container IE), that may be included in the messages, (e.g., over Iu or lur-like interface), that are exchanged between the source HNB and the target HNB, (possibly via the HNB GW).

In another embodiment, the HNB-GW may buffer the message until the handover is completed after which the HNB-GW may forward the message to the target HNB. The target HNB may then take the necessary action(s), (e.g., respond or take the information into account).

In another embodiment, the HNB-GW may forward the message to both the source HNB and the target HNB. If the handover fails, the source HNB may act upon the message, (i.e., respond or take the information into account). On the other hand, if the handover succeeds, the source HNB may ignore the message but the target HNB may act upon the message, (i.e., respond or take the information into account). Alternatively, the HNB-GW may inform the source HNB or the target HNB to act upon the message, (i.e., respond or take the information into account), depending on the success or failure status of the handover.

Alternatively, the HNB-GW may autonomously fail the newly initiated procedure, issue the appropriate message to the CN with the relevant cause, such as handover in progress, or other reject cause that does not signal an ongoing handover.

Any combination of the alternatives described above may be implemented.

An indication may be provided to the WTRU and/or the HNB about whether a handover is executed in a transparent mode or not. For example, the HNB-GW may be preconfigured to perform a transparent handover (transparent to the CN). As part of the handover signaling, the HNB GW may include an indication if the handover is transparent to the CN or not in all or any of the messages that may be sent, relayed, or modified by the HNB-GW and are destined to the HNBs. The recipients of this indication may take certain actions. For example, the target HNB may initiate an RANAP RAB modify request towards the CN after accepting a handover but not supporting all the RABs that were provided by the source HNB.

Embodiments for access control and membership verification during a handover are disclosed hereafter.

The source HNB may trigger an access control or membership verification for the handover. The source HNB initiates an access control or membership verification and sends a handover request message to the target HNB after confirmation that the WTRU at issue is a member of the target CSG cell.

FIG. 4 is a signaling diagram of an example process for access control triggered by the source HNB in one embodiment. The source HNB may send an access control query to the CN via the HNB-GW (402, 404). The access control query may include a WTRU ID. The CN may retrieve membership information for the WTRU and send an access control query response including the membership information to the source HNB via the HNB-GW (406, 408). The membership information may include a list of all or a subset of CSGs that the WTRU is member of, or a list of CSGs along with a corresponding membership status of the WTRU, (e.g., whether the WTRU is a member or not). The subset of CSGs may be generated based on information provided to the CN by the source HNB, (e.g., a list of CSGs in the access control query), or based on information available in the CN. After receiving the access control query response, if it is confirmed that the WTRU is the member of the target CSG cell (410), the source HNB sends a message including a handover request to the target HNB (412).

In order to reduce the handover latency and signaling overload on the CN, the source HNB may request the membership status of a WTRU for all or several potential target CSGs (or HNBs). Alternatively, the source HNB may request a membership status of the WTRU for selected CSGs (or HNBs). This may depend on feedback from the WTRU. For example, the WTRU may indicate that it is in the vicinity of several CSG cells that fulfills a certain requirement(s) by either providing explicitly the CSG IDs or via other methods such as a proximity indication or any other radio resource control (RRC) or non-access stratum (NAS) message. The WTRU may further provide the physical cell identifiers (PCIs) or E-UTRAN cell global identifiers (ECGIs) of these CSGs.

In another embodiment, the source HNB may send an access control query message to the HNB-GW after a handover request message has been sent to the target HNB, or in parallel with the handover request message. In this case, the target HNB may not initiate the handover or access control procedure until confirmation from the source HNB. The source HNB may proceed to completion of the handover procedure upon confirmation from the HNB-GW that the WTRU in question is a member of the target CSG cell. If the WTRU is not a member of the target CSG cell, the source HNB may abort the handover procedure depending on whether the target CSG cell is a closed CSG cell or a hybrid CSG cell. A closed CSG cell does not allow services to non-members, while a hybrid CSG cell allows services to its associated CSG members and to non-CSG members.

In case where an access control request message to the HNB-GW and a handover request message to the target CSG cell are sent in parallel, the source HNB may re-confirm to the target HNB the CSG ID and the WTRU membership status based on the information received from the CN (or HNB-GW) as a result of the access control procedure.

The target HNB may indicate to the source HNB any errors, (e.g., if there is a mismatch between the actual CSG ID that the target HNB is broadcasting versus what the CSG ID that the source HNB considers as broadcasted by the target cell). This information (i.e., the CSG ID reported by the WTRU to the source HNB) may be sent from the source HNB to the target HNB during the handover request.

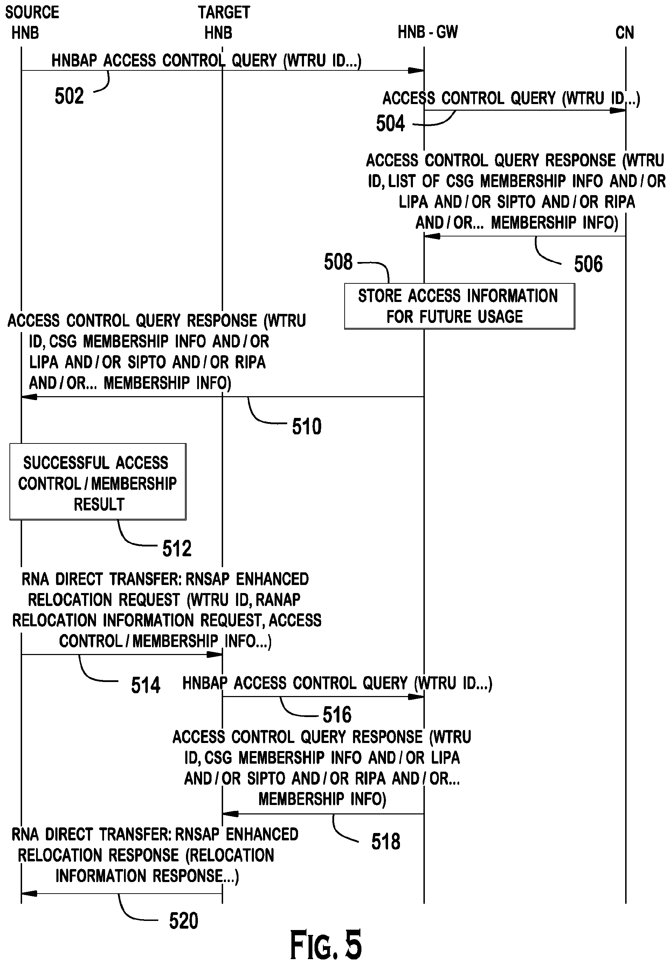

In another embodiment, the access control may be triggered by both the source HNB and the target HNB. FIG. 5 is a signaling diagram of an example process for access control in one embodiment. The source HNB may send an access control query to the HNB-GW (502). If the membership information for the WTRU is not stored in the HNB-GW, the HNB-GW sends the access control query to the CN (504). The access control query may include a WTRU ID. The access control query may also include a set of CSGs for membership verification for the WTRU. The CN may retrieve membership information for the WTRU and send an access control query response including the membership information to the HNB-GW (506). The membership information may include a list of all or a subset of CSGs that the WTRU is member of, or a list of CSGs along with a corresponding membership status of the WTRU, (e.g., whether the WTRU is a member or not). The subset of CSGs may be generated based on information provided to the CN by the source HNB, (e.g., a list of CSGs included in the access control query), or based on information available in the CN. The HNB-GW may store the membership information (508). For the first time that the HNB-GW is contacted for access control regarding a specific WTRU and/or for a current call context, the CN is queried. However, for subsequent access control, the HNB-GW has all the information to perform the access control and there is no need to query the CN. The HNB-GW sends an access control query response to the source HNB (510). After receiving the access control query response, if it is confirmed that the WTRU is the member of the target CSG cell (512), the source HNB sends a message including a handover request to the target HNB (514). After receiving the handover request, the target HNB may initiate an access control as well by sending an access control query to the HNB-GW (516). Since the HNB-GW has the membership information in possession, the HNB-GW may respond without querying the CN (518). After receiving the access control query response from the HNB-GW, the target HNB sends a response to the handover request (520).

In another embodiment, the access control request may be terminated in the CN instead of the HNB-GW. This may be the case for inter-CSG access control or inter-GW handover.

In another embodiment, the access control may be triggered by the target HNB, or by both the target HNB and the source HNB.

In another embodiment, the access control may be performed directly at the HNB either at the source HNB or at the target HNB. For example, the source HNB may obtain the neighbor cells information, (e.g., the list of CSGs supported by the neighbor cells), either directly from the neighbor cells, or from the HNB-GW or the CN. The list of CSGs supported by the neighbor cells (including the target cell) may be updated during neighbor information exchange. The source HNB may then perform an access control based on the supported CSG information and the WTRU CSG membership information. For example, the cell may have multiple CSGs if the cell supports multiple carriers with potentially different CSGs. The neighbor HNBs may also have multiple CSGs if the HNB support multiple cells.

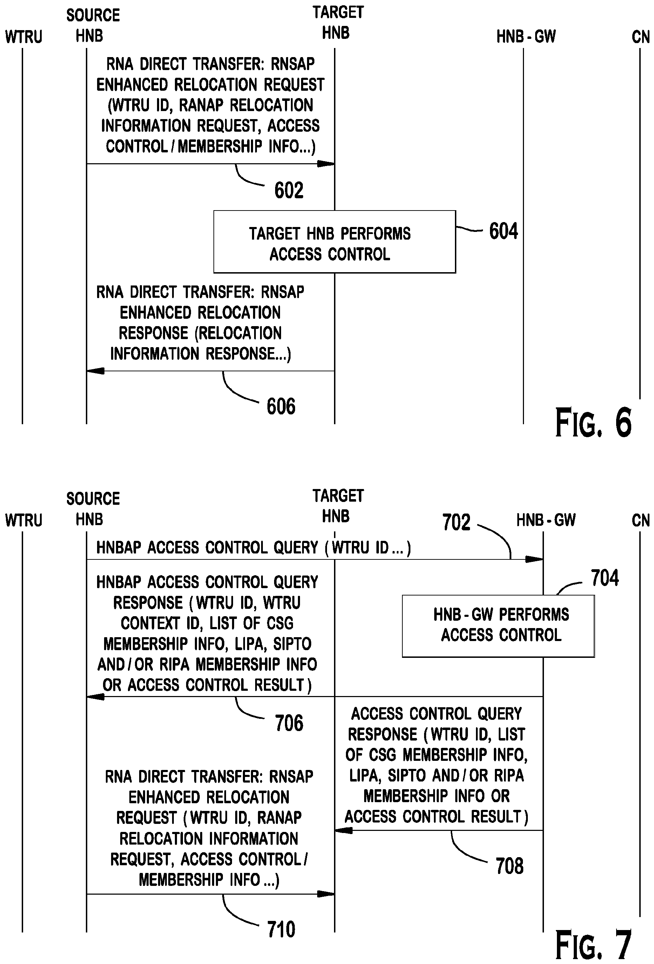

FIG. 6 is a signaling diagram of an example process wherein an access control is performed at the target HNB. The source HNB sends a handover request, (i.e., RNA Direct Transfer: RNSAP Enhanced Relocation Request (WTRU ID, RANAP Relocation Information Request, Access control/membership info, etc.)), to the target HNB (602). The target HNB performs access control (604). The target HNB then sends a handover response to the source HNB (606).

In another embodiment, the source HNB may query the HNB-GW (or alternatively the CN) for access control, and the access control query response may be sent directly to the target HNB, or to both the source HNB and the target HNB. FIG. 7 is a signaling diagram of an example process that the source HNB queries the HNB-GW for access control. The source HNB sends an access control query including WTRU ID, etc. to the HNB-GW (702). The HNB-GW performs access control (704) and sends access control query acknowledgement including WTRU ID, WTRU context ID, list CSG membership information, LIPA, SIPTO and/ or RIPA membership information, and/or access control result to the source HNB (706). The HNB-GW may also send the access control query acknowledgement to the target HNB (708). The source HNB then sends a handover request (e.g., RNA Direct Transfer: RNSAP Enhanced Relocation Request including WTRU ID, RANAP Relocation Information Request, Access control or membership information, etc. (710).

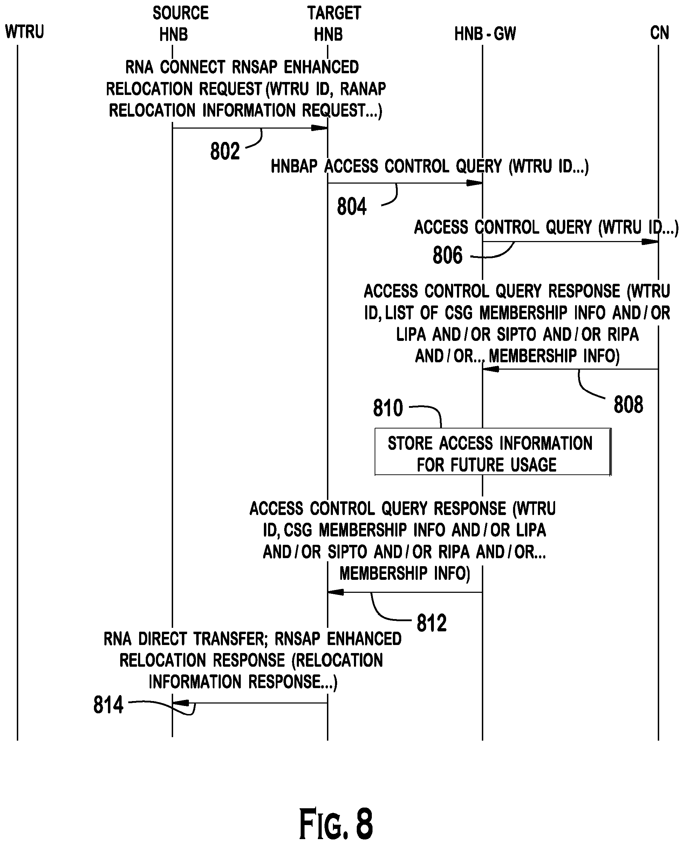

In another embodiment, the access control may be triggered from the target HNB toward the CN. FIG. 8 is a signaling diagram of an example process for access control in one embodiment. The source HNB sends a handover request message to the target HNB (802). The handover request message may include a WTRU ID, RANAP relocation information, etc. The target HNB initiates the access control procedure by sending an access control query to the HNB-GW (804). If the membership information is not stored in the HNB-GW, the HNB-GW sends the access control query to the CN (806). The CN retrieves membership information for the WTRU and sends an access control query response including the membership information to the HNB-GW (808). The access control query may include the WTRU ID, and the CN (or the HNB-GW) may provide the membership information of all or a subset of CSGs for the WTRU. The membership information may include a list of all or a subset of CSGs that the WTRU is member of, or a list of CSGs along with a corresponding membership status of the WTRU, (e.g., whether the WTRU is a member or not). The subset of CSGs may be generated based on information provided to the CN by the source HNB, (e.g., a list of CSGs included in the access control query), or based on information available in the CN. The HNB-GW may store the membership information (810). For the first time that the HNB-GW is contacted for access control regarding a specific WTRU and/or for a current call context, the CN is queried. However, for subsequent access control, the HNB-GW may have all the information to perform the access control and may not need to query the CN. In that case, the HNB-GW may perform access control. The HNB-GW sends the access control query response to the target HNB (812). After receiving the access control query response, if it is confirmed that the WTRU is the member of the target CSG cell, the target HNB sends a relocation response message to the source HNB (814). If the WTRU membership information is stored in the HNB-GW, for the subsequent handover, the HNB-GW may provide the membership information without querying the CN.

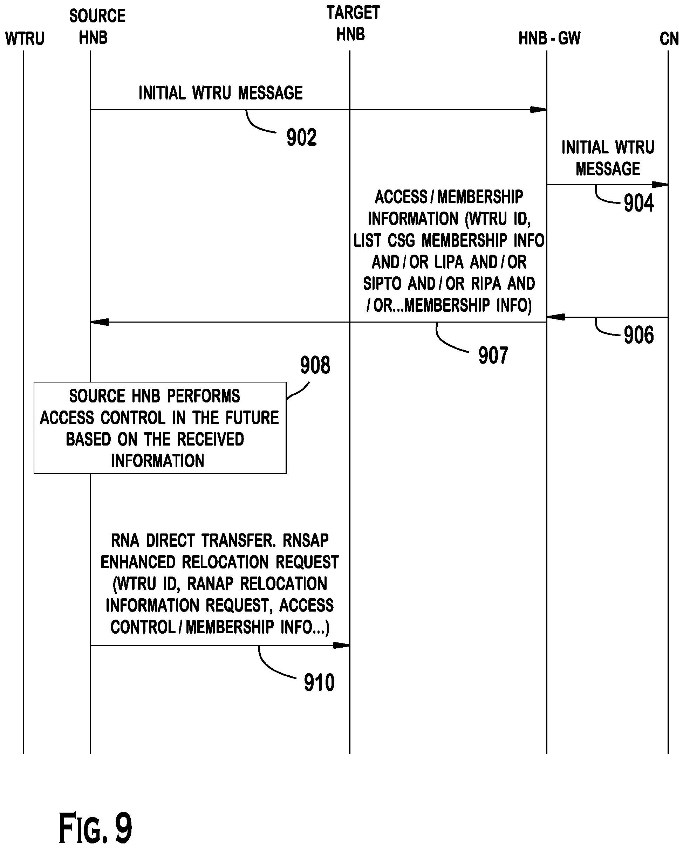

In another embodiment, the HNB-GW or the HNB (source or target HNB) may download, (e.g., from the CN/home subscriber server (HSS) or any other relevant entity), the CSG membership information, for example, when the source HNB sends a registration request to the HNB-GW or when the handover procedure is initiated or under way. FIG. 9 shows a signaling diagram of access control and membership verification in one embodiment. The source HNB sends an initial WTRU message for the registration to the CN via the HNB-GW (902, 904). The CN sends the member information for the WTRU to the source HNB via the HNB-GW (906, 907). Alternatively, the membership information may be downloaded to the HNB-GW or to the target HNB. The source HNB may perform the access control based on the membership information (908). If it is determined that the WTRU is a member of the target CSG cell, the source HNB sends a handover request to the target HNB (910).

The membership information may include a list of all or a subset of CSGs that the WTRU is member of, or a list of CSGs along with a corresponding membership status of the WTRU, (e.g., whether the WTRU is a member or not). The subset of CSGs may be generated based on information provided to the CN by the source HNB, or based on information available in the CN. This information may include membership expiry information as well as charging and billing information. The HNB-GW may use this information to perform subsequent access controls during relocation/handover. In case where there is a change in membership status information during the lifetime of the current call or call context, the CN may inform the HNB-GW and/or the HNB of such change. The HNB-GW and/or the HNB may take such change notification into account for future admission control. If a membership status changes with respect to the CSG of the HNB currently serving the WTRU, the HNB may take a necessary action.

The access control procedure (for CSG cells) and membership verification procedures may be carried out using the same set of messages (hybrid cell) or using different set of messages. The access control request message and the membership verification request message may include a message type field, a WTRU identity field, and one CSG ID or a list of CSG IDs. The access control request messages may also include an HNB access control mode element indicating whether the cell of the HNB operates in a closed, hybrid, or open access mode. The access control response message and the membership verification response message may include a message type field, a WTRU identity field, and a membership status field for one CSG ID or a list of CSG IDs. The membership verification message may be used to perform membership verification in the case of hybrid CSG cells and is used when the target cell is hybrid cell.

The HNB or the HNB-GW may provide to the CN the CSG ID and the cell access mode information, (e.g., hybrid cell, closed cell, open cell, etc.), to help with charging and billing handling. For example, if the admission control is handled in the HNB or in the HNB-GW transparently to the CN while the charging is handled by the CN, the HNB or the HNB-GW may provide to the CN the CSG ID and the cell access mode of the cell serving the WTRU.

The embodiments disclosed above for access control or membership verification may be applied to CSG membership in terms of local IP access (LIPA), selected IP traffic offload (SIPTO), and/or remote IP access (RIPA) services. More specifically, in addition to the generic CSG membership status information, (e.g., whether the WTRU is member or non-member of the CSG), in the access control query response, additional access control information may be provided in the access control response message. The additional information includes, but is not limited to, access information for LIPA (e.g., LIPA allowed or LIPA not allowed), access information for SIPTO (e.g., SIPTO allowed or SIPTO not allowed), access control for RIPA (RIPA allowed or RIPA not allowed), or access control information for any other capability defined as part of the user profile in the HSS or which may be defined as part of the user profile in the HSS and which may or may not be supported by the target cell or the target CSG. For example, small data transmission access control may be tied to CSG or a combination of CSG and access point name (APN) and stored as part of the subscriber profile in the HSS or any other entity of the network. The access control response may include information on small data transmission capability.

In another embodiment, the various access control attributes, (e.g., CSG membership status, LIPA access attribute, SIPTO access attribute, RIPA access attribute, small data access attribute, etc.), may be provided to the requesting node or any other relevant node, (i.e., source H(e)NB, target H(e)NB, H(e)NB-GW, source RNC, target RNC, source (e)NB, target (e)NB, etc.), in a single access control response message or multiple access control response messages or any other equivalent message or messages. Any of the access control attribute may be requested by the requesting entity individually, all together, or in any combination.

In another embodiment, the access control or membership verification may be defined in terms of access restriction or allowance. The CSGs or cells not identified in the access restriction list may be considered accessible. For example, the handover restriction list provided by the mobility management entity (MME) to the eNB in the HANDOVER REQUEST and INITIAL CONTEXT SETUP and DOWNLINK NAS TRANSPORT messages may be impacted to consider handover restrictions due to LIPA or SIPTO permission configuration. Thus, an eNB may use this information to remove candidate neighbors even if the WTRU reported good radio conditions when providing measurement reports. A target eNB may use this information to determine whether or not the request should be rejected.

Embodiments for data interruption avoidance during handover are disclosed hereafter. One way to avoid data interruption or data drop during the handover is to have the HNB-GW perform data bi-casting during the handover preparation. However, starting the data bi-casting before the source HNB send the RRC connection reconfiguration request message to the WTRU may be too early.

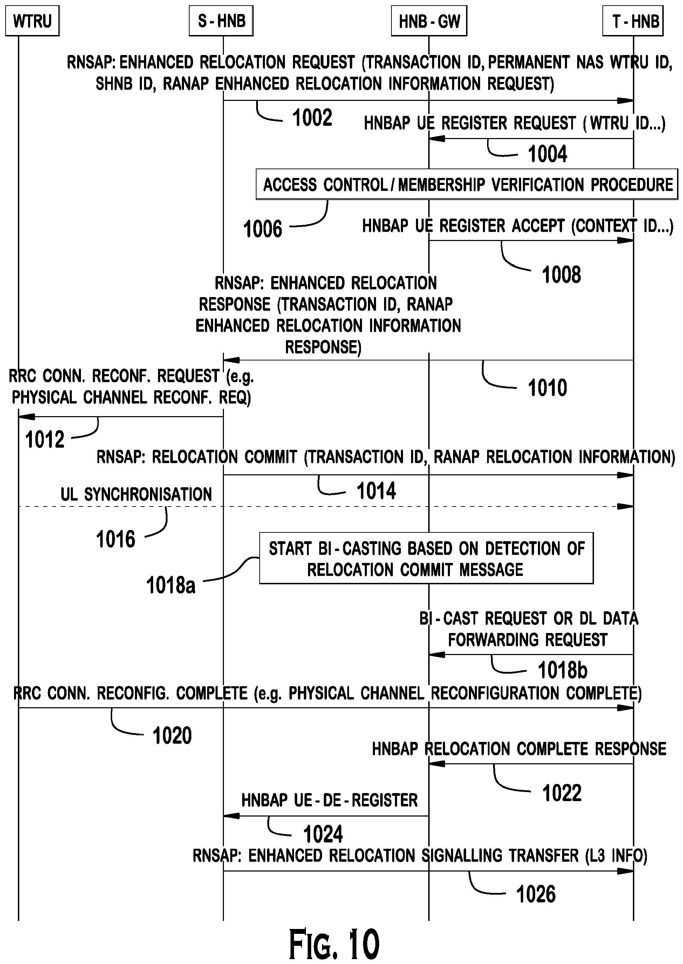

FIG. 10 is a signaling diagram of an example process of data bi-casting in one embodiment. The source HNB sends a handover request to the target HNB (1002). The target HNB sends a WTRU registration request to the HNB-GW (1004). The target HNB may perform access control procedure with the HNB-GW (1006). Once the WTRU is registered, the HNB-GW sends a WTRU register accept message to the target HNB (1008). The target HNB then sends a handover response message to the source HNB (1010). The source HNB then sends an RRC reconfiguration request to the WTRU (1012), and sends a handover commit message to the target HNB (1014). The WTRU performs UL synchronization with the target HNB (1016).

In one embodiment, the HNB-GW may initiate bi-casting based on the detection of the relocation commit message being sent to the target HNB by the source HNB (1018a). Alternatively, the HNB-GW may initiate bi-casting based on the detection of the relocation response message being sent to the source HNB by the target HNB.

Alternatively, the target HNB may trigger data bi-casting by sending an indication to the HNB-GW (1018b). The indication may be a new message (e.g., a bi-casting request or DL data forwarding request), or a new information element in any message. The target HNB may send the indication to the HNB-GW after the relocation response is sent to the source HNB or later in time, (e.g., after the detection of WTRU uplink (UL) synchronization). Upon reception of this indication, the HNB-GW starts bi-casting DL data to both the source HNB and the target HNB.

The WTRU sends an RRC configuration complete message to the target HNB (1020). The target HNB sends a relocation complete response to the HNB-GW (1022), and the HNB-GW sends a WTRU de-register message to the source HNB (1024). The source HNB then sends a relocation signaling transfer message to the target HNB (1026).

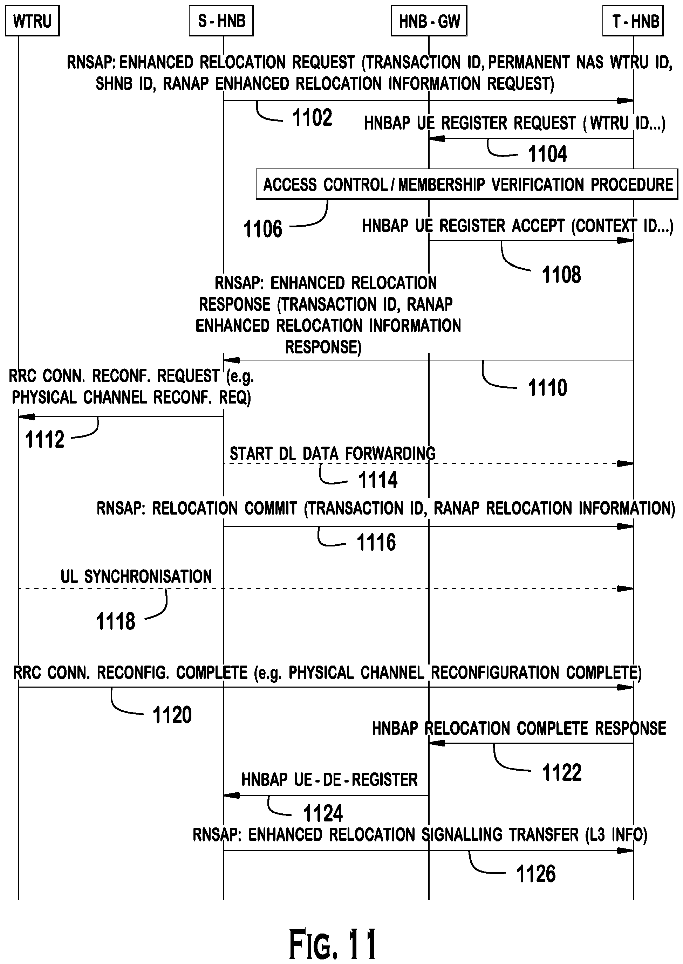

In another embodiment, the source HNB may forward the DL data to the target HNB. FIG. 11 is a signaling diagram of an example process for bi-casting in accordance with another embodiment. The source HNB sends a handover request to the target HNB (1102). The target HNB sends a WTRU registration request to the HNB-GW (1104). The target HNB may perform access control procedure with the HNB-GW (1106). Once the WTRU is registered, the HNB-GW sends a WTRU register accept message to the target HNB (1108). The target HNB then sends a handover response message to the source HNB (1110). The source HNB then sends an RRC reconfiguration request to the WTRU (1112). The source HNB may start downlink forwarding to the target HNB for bi-casting (1114). The source HNB sends a handover commit message to the target HNB (1116). The WTRU performs UL synchronization with the target HNB (1118). The WTRU sends an RRC configuration complete message to the target HNB (1120). The target HNB sends a relocation complete response to the HNB-GW (1122), and the HNB-GW sends a WTRU de-register message to the source HNB (1124). The source HNB then sends a relocation signaling transfer message to the target HNB (1126).

Embodiments for mobility between macro network (RNC) and HNB network are disclosed hereafter.

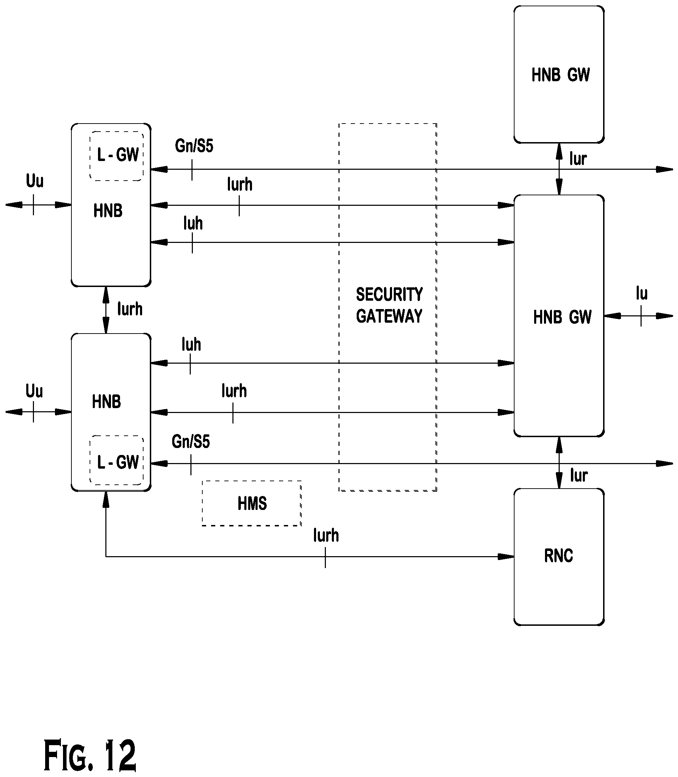

FIG. 12 shows an example HNB access network with macro layer to femto layer mobility reference model. The reference model in FIG. 12 includes network elements that make up the HNB access network and a macro network RNC. The Iu interface between the CN and the HNB-GW serves the same purpose as the interface between the CN and an RNC. The local gateway (L-GW) may be present when the HNB operates in LIPA. When present, it is co-located with the HNB. This L-GW may have a Gn/S5 interface towards the SGSN/SGW which does not use the HNB GW, and a Gi interface towards the residential/IP network. The L-GW may be external to the HNB, (i.e., not co-located with the HNB). The interface between the L-GW and the HNB in that case may be a new interface or an existing interface such as Iuh interface, Iurh interface, or both. The HNB access network supports Iurh connectivity between HNBs. Direct Iurh interface connectivity may be established between two HNBs, and in that case, the HNB-GW is not involved in the Iurh signaling. Alternatively, Iurh interface connectivity may be established between HNBs with the HNB-GW serving as an Iurh proxy. Iurh interface may be established between the RNC and the HNB, and Iur interface may be established between the RNC and the HNB-GW and between HNB-GWs.

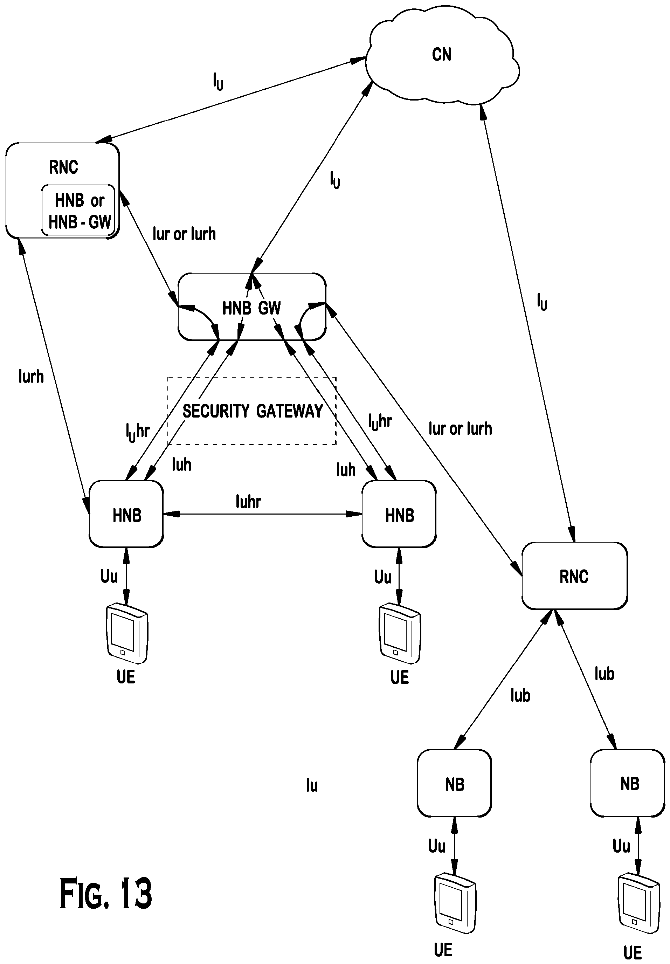

FIG. 13 shows an example network architecture including the HNB access network and the macro radio access network. FIG. 13 also shows the Iurh interface established between the RNC and the HNB, and Iur interface established between the RNC and the HNB-GW.

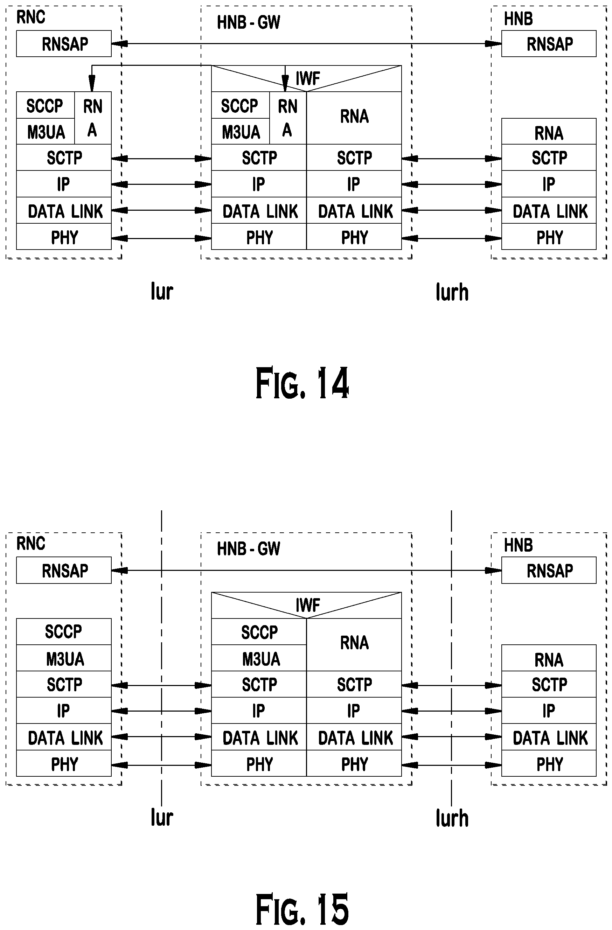

FIG. 14 shows an example control plane protocol stack in one embodiment. In this embodiment, the RNC implements RNSAP user adaptation layer (RNA). The RNA supports the transport of any RNSAP signaling messages between the RNC and HNBs and between the HNBs. The RNA may support direct lurh-connectivity and lurh-connectivity via the HNB-GW. The RNA may provide a connection-oriented data transfer service and a connectionless data transfer service.

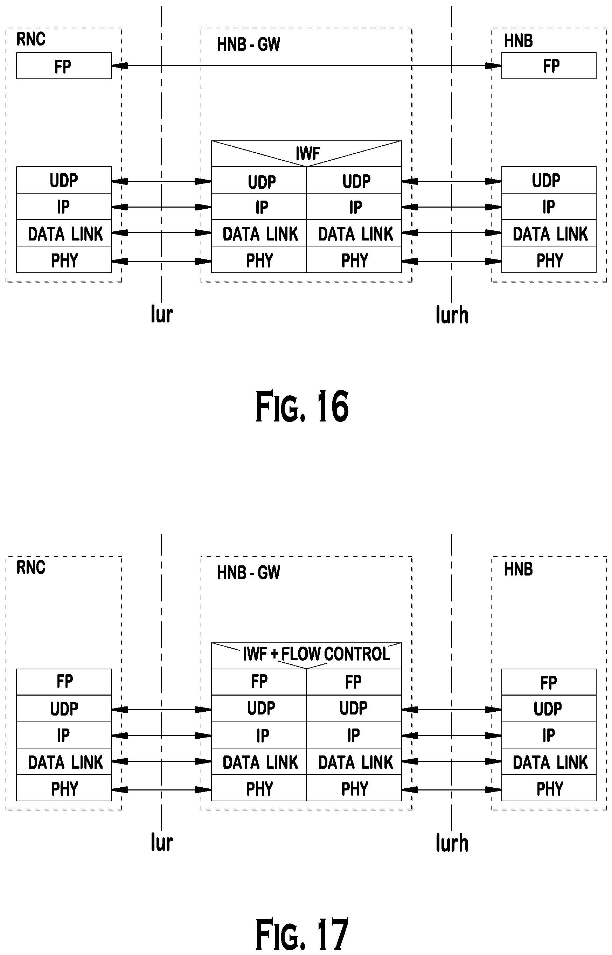

FIG. 15 shows an example control plane protocol stack in accordance with another embodiment. In this embodiment, the RNC does not implement an RNA. FIG. 16 shows an example user plane protocol stack in one embodiment. FIG. 17 shows an example user plane protocol stack in another embodiment.

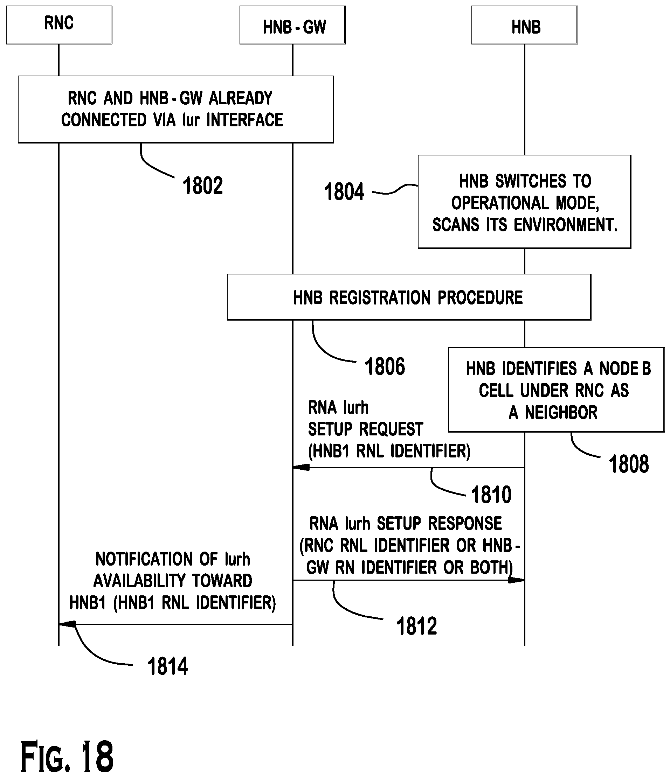

FIG. 18 is a flow diagram of an example process for Iurh setup (direct Iurh connectivity) in one embodiment. The RNC and the HNB-GW establish a connection via Iur interface (1802). Once an Iur interface is established between the RNC and the HNB-GW, this connection may be used toward any HNB that will eventually connect to the HNB-GW. The HNB may initiate the Iurh association toward the RNC. The HNB-GW may terminate the association request on behalf of the RNC. The HNB switches to the operational mode and scans its coverage area (1804). The HNB performs HNB registration procedure with the HNB-GW (1806). The HNB identifies a NobeB cell under the RNC as a neighbor (1808). The HNB sends an RNA Iurh setup request to the HNB-GW (1810). Upon reception of the Iurh setup request message toward the RNC, the HNB-GW may terminate the RNA message and update its internal Iurh/Iur connectivity table to reflect the creation of Iur/Iurh connectivity between the HNB and the targeted RNC, and send an RNA Iurh setup response message to the HNB (1812). The HNB-GW may notify the RNC of the availability of a new Iurh RNL level connectivity toward the HNB (1814). The Iurh interface association to Iur may be established on an RNC basis and not for each individual NodeB or cells under that RNC. The establishment of Iur and Iurh association may be triggered upon WTRU measurement report.

In another embodiment, either the RNC, the HNB, or the HNB-GW may initiate the RNL level Iurh connectivity establishment. This may be triggered upon WTRU measurement report with neighbor cell information or autonomous detection by the HNB or the NodeB. The RNA connectivity association messages are peer messages between the RNC and the HNB. In the case of direct Iuh connectivity between the HNB and the target RNC, both the HNB and the RNC may exchange their respective transport network layer (TNL) addresses.

Embodiments for virtual active set (VAS) management and active set update in support of soft handover are disclosed hereafter.

The active set includes cells with which the WTRU is in soft or softer handover with. Cells within the active set are active cells, while those not in the active set are non-active cells. The VAS is an active set associated with a non-used frequency that is not currently used by the WTRU. Cells in the VAS are cells that the WTRU is measuring for potential inter-frequency handover. Detected set cells are the cells that are detected by the WTRU. Both radio link setup procedure and radio link addition procedure (RNSAP and NBAP) need to be updated to include IEs for cell access mode information, WTRU CSG membership information as well as other services (LIPA, SIPTO, RIPA, small data transmission, etc.) access control information.

The WTRU membership status and other services access level status may be taken into account when determining whether or not a new radio link may be added in support of soft handover. Similarly, a radio link may be dropped from the WTRU active set when the WTRU membership expired.

The current 3GPP specification specifies that a WTRU shall support a single virtual active set per non-used frequency for non-CSG measurements if detected set cells are not considered for that frequency, and the WTRU shall support two virtual active sets per non-used frequency for non-CSG measurements if detected set cells are considered for that frequency. Both virtual active sets are maintained using the same rules in parallel. The first virtual active set is maintained considering only cells stored in CELL_INFO_LIST (a list of non-CSG cells that are provided to the WTRU by the network for inter-frequency handover), and the second virtual active set is maintained additionally considering any detected cells (cells stored in CELL_INFO_LIST and cells not stored in CELL_INFO_LIST). This is in order to allow the WTRU to determine whether or not detected set cells affect the measurement event result. If any measurement is configured for CSG cells (using CELL_INFO_CSG_LIST (a list of femto cells (CSG layer cells) that are provided to the WTRU by the network)) then the WTRU shall additionally maintain a "CSG virtual active set" for this purpose."

According to the above, the WTRU may maintain up to three virtual active sets per non-used frequency, (i.e., a first VAS including some or all of the cells in CELL_INFO_LIST, a second VAS including some or all of the cells stored in CELL_INFO_LIST plus some or all of the detected cells not stored in CELL_INFO_LIST, and a third VAS including some or all of the cells stored in CELL_INFO_CSG_LIST). One of these sets is dedicated to CSG cells on that non-used frequency. It is not clear which list of cells should be used to maintain the VAS for the soft handover between the macro layer cells and the femto layer cells. Moreover, it is not clear when such list should be used.

In one embodiment, a combination of CELL_INFO_LIST and CELL_INFO_CSG_LIST may be used as the VAS for supporting soft handover between the macro cell and the femto cell and perform measurements based on the VAS for the soft handover between the macro cells and the femto cells. Alternatively, a combination of CELL_INFO_LIST, detected cells, and CELL_INFO_CSG_LIST may be used as the VAS. Alternatively, a new cell list that may be a combination of macro layer cells and CSG layers cells may be signaled to the WTRU by the network.

The WTRU may autonomously determine when to use and when not to use the soft handover-based cell list, (i.e., the list of cells that the VAS should be constructed from for supporting soft handover between the macro cell and the femto cell). For example, such determination may be made based on the WTRU fingerprint and the determination by the WTRU of being in the vicinity of CSG cells that the WTRU is a member of or not member of.

In another embodiment, the WTRU may consider, in addition to the non-CSG cells from the soft handover-based cell list, the CSG cells which have passed the WTRU preliminary access check (e.g., membership verification).

In another embodiment, when to use the soft handover-based cell list in support of VAS monitoring may be signaled by the network to the WTRU. For example, a soft handover-based cell list may be applicable as soon as received from the network. Alternatively, the network may communicate the list to the WTRU but the WTRU may use the list upon receiving further trigger from the network. Such trigger may be signaled once the network have confirmed the WTRU membership status of all or some of the CSG cells in the cell list used in support of the VAS monitoring.

In another embodiment, in addition to non-CSG cells, the network may include the CSG cells which have successfully passed the access control verification in the soft handover-based cell list for VAS monitoring.

### Embodiments.

1. A method for supporting HNB mobility.
2. A method of embodiment 1 comprising a source HNB determining for a relocation of a WTRU from the source HNB to a target HNB.
3. The method of embodiment 2 further comprising the source HNB initiating an access control for the WTRU to determine whether the WTRU is allowed to receive a service provided via the target HNB.
4. The method as in any one of embodiments 2-3, further comprising the source HNB sending an access control query to either a CN or an HNB-GW for verifying that the WTRU is allowed to receive a service provided via the target HNB.
5. The method of embodiment 4 further comprising the source HNB receiving an access control query response.
6. The method of embodiment 5 further comprising the source HNB sending a relocation request to the target HNB.
7. The method as in any one of embodiments 5-6, wherein the access control query response includes access control information for all or a subset of subscriber groups that the WTRU is a member of.
8. The method as in any one of embodiments 5-7, wherein the access control query response includes a list of subscriber groups along with a corresponding membership status of the WTRU for each subscriber group.
9. The method as in any one of embodiments 5-8, wherein the source HNB receives the access control query response from either the CN or the HNB-GW.
10. The method as in any one of embodiments 5-9, wherein the access control query includes at least one subscriber group for access control verification for the WTRU.
11. The method as in any one of embodiments 6-10, wherein the source HNB sends the relocation request to the target HNB on a determination that the WTRU is allowed to receive a service provided via the target HNB.
12. The method as in any one of embodiments 6-11, wherein the source HNB sends the relocation request to the target HNB before receiving the access control query response and completes the relocation on a determination that the WTRU is allowed to receive a service provided via the target HNB based on the access control query response.
13. A method for supporting home NodeB (HNB) mobility.
14. The method of embodiment 13 comprising an HNB scanning its coverage area.
15. The method of embodiment 14 comprising the HNB performing an HNB registration with an HNB-GW.
16. The method as in any one of embodiments 14-15, further comprising the HNB identifying a cell under a macro-network RNC as a neighbor.
17. The method as in any one of embodiments 15-16, further comprising the HNB sending a request to the HNB-GW to setup a connection toward the RNC.
18. The method of embodiment 17 further comprising the HNB receiving a response message from the HNB-GW in response to the request.
19. The method as in any one of embodiments 15-18, wherein RNSAP RNA messages are terminated at the HNB-GW and an internal connectivity table at the HNB-GW is updated to reflect a creation of connectivity between the HNB and the RNC.
20. An apparatus for supporting HNB mobility.
21. The apparatus of embodiment 20 comprising a processor configured to determine for a relocation of a WTRU from a source HNB to a target HNB.
22. The apparatus of embodiment 21 wherein the processor is configured to initiate an access control for the WTRU to determine whether the WTRU is allowed to receive a service provided via the target HNB.
23. The apparatus as in any one of embodiments 21-22, wherein the processor is configured to send an access control query to either a CN or an HNB-GW for verifying that the WTRU is allowed to receive a service provided via the target HNB.
24. The apparatus of embodiment 23 wherein the processor is configured to receive an access control query response, and send a relocation request to the target HNB.
25. The apparatus of embodiment 24 wherein the access control query response includes access control information for all or a subset of subscriber groups that the WTRU is a member of.
26. The apparatus as in any one of embodiments 24-25, wherein the access control query response includes a list of subscriber groups along with a corresponding membership status of the WTRU for each subscriber group.
27. The apparatus as in any one of embodiments 24-26, wherein the processor is configured to receive the access control query response from either the CN or the HNB-GW.
28. The apparatus as in any one of embodiments 23-27, wherein the access control query includes at least one subscriber group for access control verification for the WTRU.
29. The apparatus as in any one of embodiments 24-28, wherein the processor is configured to send the relocation request to the target HNB on a determination that the WTRU is allowed to receive a service provided via the target HNB.
30. The apparatus as in any one of embodiments 24-29, wherein the processor is configured to send the relocation request to the target HNB before receiving the access control query response and completes the relocation on a determination that the WTRU is allowed to receive a service provided via the target HNB based on the access control query response.
31. An apparatus for supporting HNB mobility.
32. The apparatus of embodiment 31 comprising a transmitter/receiver configured to perform scanning its coverage area.
33. The apparatus of embodiment 32 comprising a processor configured to perform an HNB registration with an HNB-GW.
34. The apparatus of embodiment 33 wherein the processor is configured to identify a cell under a macro-network RNC as a neighbor.
35. The apparatus of embodiment 34 wherein the processor is configured to send a request to the HNB-GW to setup a connection toward the RNC, and receive a response message from the HNB-GW in response to the request.
36. The apparatus as in any one of embodiments 33-35, wherein RNSAP RNA messages are terminated at the HNB-GW and an internal connectivity table at the HNB-GW is updated to reflect a creation of connectivity between the HNB and the RNC.
37. A method for supporting mobility between macro cells and femto cells.
38. The method of embodiment 37 comprising configuring a VAS for a non-used frequency that is not currently used by a WTRU, the VAS including at least one macro cell and at least one femto cell.
39. The method of embodiment 38 further comprising performing measurements based on the VAS.
40. The method as in any one of embodiments 38-39, wherein the VAS is configured with cells in CELL_INFO_LIST and CELL_INFO_CSG_LIST.
41. The method as in any one of embodiments 38-39, wherein the VAS is configured with cells in CELL_INFO_LIST, CELL_INFO_CSG_LIST and detected cells.
42. The method as in any one of embodiments 38-39, wherein the VAS is configured with cells in a cell list that is signaled to the WTRU by a network.
43. The method as in any one of embodiments 38-42, wherein the WTRU autonomously determines when to use and when not to use the VAS.
44. A method for supporting home NodeB (HNB) mobility, the method comprising:
   a source HNB determining to handover a wireless transmit/receive unit (WTRU) from the source HNB to a target HNB; and
   the source HNB initiating an access control for the WTRU to determine whether the WTRU is allowed to receive a service provided via the target HNB.
45. The method of emb. 44 further comprising:
   the source HNB sending an access control query to either a core network (CN) or an HNB gateway (HNB-GW) for verifying that the WTRU is allowed to receive a service provided via the target HNB;
   the source HNB receiving an access control query response; and
   the source HNB sending a relocation request to the target HNB.
46. The method of emb. 45 wherein the access control query response includes access control information for all or a subset of subscriber groups that the WTRU is a member of.
47. The method of emb. 45 wherein the access control query response includes a list of subscriber groups along with a corresponding membership status of the WTRU for each subscriber group.
48. The method of emb. 45 wherein the source HNB receives the access control query response from either the CN or the HNB-GW.
49. The method of emb. 45 wherein the access control query includes at least one subscriber group for access control verification for the WTRU.
50. The method of emb. 45 wherein the source HNB sends the relocation request to the target HNB on a determination that the WTRU is allowed to receive a service provided via the target HNB.
51. The method of emb. 45 wherein the source HNB sends the relocation request to the target HNB before receiving the access control query response and completes the relocation on a determination that the WTRU is allowed to receive a service provided via the target HNB based on the access control query response.
52. A method for supporting home NodeB (HNB) mobility, the method comprising:
   a home NodeB (HNB) scanning its coverage area;
   the HNB performing an HNB registration with an HNB gateway (HNB-GW);
   the HNB identifying a cell under a macro-network radio network controller (RNC) as a neighbor;
   the HNB sending a request to the HNB-GW to setup a connection toward the RNC; and
   the HNB receiving a response message from the HNB-GW in response to the request.
53. The method of emb. 52 wherein radio network subsystem application part (RNSAP) user adaptation layer (RNA) messages are terminated at the HNB-GW and an internal connectivity table at the HNB-GW is updated to reflect a creation of connectivity between the HNB and the RNC.
54. An apparatus for supporting home NodeB (HNB) mobility, the apparatus comprising:
   a processor configured to handover a wireless transmit/receive unit (WTRU) from a source HNB to a target HNB, and initiate an access control for the WTRU to determine whether the WTRU is allowed to receive a service provided via the target HNB.
55. The apparatus of emb. 54 wherein the processor is configured to send an access control query to either a core network (CN) or an HNB gateway (HNB-GW) for verifying that the WTRU is allowed to receive a service provided via the target HNB, receive an access control query response, and send a relocation request to the target HNB.
56. The apparatus of emb. 55 wherein the access control query response includes access control information for all or a subset of subscriber groups that the WTRU is a member of.
57. The apparatus of emb. 55 wherein the access control query response includes a list of subscriber groups along with a corresponding membership status of the WTRU for each subscriber group.
58. The apparatus of emb. 55 wherein the processor is configured to receive the access control query response from either the CN or the HNB-GW.
59. The apparatus of emb. 55 wherein the access control query includes at least one subscriber group for access control verification for the WTRU.
60. The apparatus of emb. 55 wherein the processor is configured to send the relocation request to the target HNB on a determination that the WTRU is allowed to receive a service provided via the target HNB.
61. The apparatus of emb. 55 wherein the processor is configured to send the relocation request to the target HNB before receiving the access control query response and completes the relocation on a determination that the WTRU is allowed to receive a service provided via the target HNB based on the access control query response.
62. An apparatus for supporting home NodeB (HNB) mobility, the apparatus comprising:
   a transmitter/receiver configured to perform scanning its coverage area; and
   a processor configured to perform an HNB registration with an HNB gateway (HNB-GW), identify a cell under a macro-network radio network controller (RNC) as a neighbor, send a request to the HNB-GW to setup a connection toward the RNC, and receive a response message from the HNB-GW in response to the request.
63. The apparatus of emb. 62 wherein radio network subsystem application part (RNSAP) user adaptation layer (RNA) messages are terminated at the HNB-GW and an internal connectivity table at the HNB-GW is updated to reflect a creation of connectivity between the HNB and the RNC.
64. A method for supporting mobility between macro cells and femto cells, the method comprising:
   configuring a virtual active set (VAS) for a non-used frequency that is not currently used by a wireless transmit/receive unit (WTRU), the VAS including at least one macro cell and at least one femto cell; and
   performing measurements based on the VAS.
65. The method of emb. 64 wherein the VAS is configured with either cells in CELL_INFO_LIST and CELL_INFO_CSG_LIST, cells in CELL_INFO_LIST, CELL_INFO_CSG_LIST and detected cells, or cells in a cell list that is signaled to the WTRU by a network.
66. The method of emb. 64 wherein the WTRU autonomously determines when to use and when not to use the VAS.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

## Claims

1. An eNodeB (eNB) comprising:
a first transceiver configured to receive a first signal from a wireless transmit/receive unit (WTRU), the first signal including a closed subscriber group identification (CSG ID) for a home eNodeB (HeNB);
a processor operatively coupled to the first transceiver and a second transceiver, the processor and the second transceiver configured, based on the first signal, to send a membership verification request with the CSG ID for the HeNB to a core network;
the processor and second transceiver further configured to receive from the core network a result of a membership verification indicating that the WTRU is permitted to access the HeNB;
the processor and the second transceiver further configured, based on the result of the membership verification, to send a message to the HeNB for the HeNB to establish communication with the WTRU, wherein the message includes radio access bearer (RAB) information associated with the WTRU;
the processor and the second transceiver further configured to receive a configuration message from the HeNB; and
the processor and the first transceiver further configured to transmit a second signal including a radio resource control (RRC) reconfiguration message to the WTRU, wherein the RRC reconfiguration message is based on the received configuration message from the HeNB.

2. The eNB of claim 1, wherein the RRC reconfiguration message includes RAB configuration information.

3. The eNB of claim 1, wherein the processor and the first transceiver are further configured to communicate with the WTRU after the RRC reconfiguration message is transmitted.

4. The eNB of claim 1, wherein the processor, the first transceiver and the second transceiver are further configured to handover the WTRU to the HeNB based on the transmitted RRC reconfiguration message.

5. The eNB of claim 1, wherein the processor is further configured to determine local internet protocol access (LIPA) and selected internet protocol traffic offload (SIPTO) capabilities of the HeNB.

6. The eNB of claim 1, wherein the processor and the second transceiver are further configured to receive an RRC reconfiguration complete message.

7. The eNB of claim 1, wherein the RAB information includes RAB parameters.

8. A method in an eNodeB (eNB), the method comprising:
receiving, by the eNB, a first signal from a wireless transmit/receive unit (WTRU), the first signal including a closed subscriber group identification (CSG ID) for a home eNodeB (HeNB);
sending, by the eNB, based on the first signal, a membership verification request with the CSG ID for the HeNB to a core network;
receiving, by the eNB, from the core network, a result of a membership verification indicating that the WTRU is permitted to access the HeNB;
sending, by the eNB, based on the result of the membership verification, a message to the HeNB for the HeNB to establish communication with the WTRU, wherein the message includes radio access bearer (RAB) information associated with the WTRU;
receiving, by the eNB, a configuration message from the HeNB; and
transmitting, by the eNB, a second signal including a radio resource control (RRC) reconfiguration message to the WTRU, wherein the RRC reconfiguration message is based on the received configuration message from the HeNB.

9. The method of claim 8, wherein the RRC reconfiguration message includes RAB configuration information.

10. The method of claim 8, further comprising:
communicating, by the eNB, with the WTRU after the RRC reconfiguration message is transmitted.

11. The method of claim 8, further comprising:
handing over, by the eNB, the WTRU to the HeNB based on the transmitted RRC reconfiguration message.

12. The method of claim 8, further comprising:
determining, by the eNB, local internet protocol access (LIPA) and selected internet protocol traffic offload (SIPTO) capabilities of the HeNB.

13. The method of claim 8, further comprising:
receiving, by the eNB, an RRC reconfiguration complete message.

14. The method of claim 8, wherein the RAB information includes RAB parameters.
